# EUROPEAN PATENT APPLICATION

(11) **EP 2 604 705 A1**
(43) Date of publication of application: **19.06.2013**
(21) Application number: 12425058.0
(22) Date of filing: 21.03.2012
(51) Int. Cl.: C14B 7/02, A41D 31/02, B32B 9/02

(54) **Process for preparing 4-ways leather**

(71) Applicant: Karazissis Dolzanelli, Costantino, 27029 Vigevano (Pavia) (IT)
(72) Inventor: Karazissis Dolzanelli, Costantino, 27029 Vigevano (IT)
(74) Representative: Croce, Valeria

(57) **Abstract**

The present invention describes a process for preparing an elasticised material, as well as its applications in the field of furnishing, clothing, including sports clothing, footwear and the automobile industry.

## Description

The object of the present invention is a process for preparing a bi-elastic material, as well as its applications in the field of furnishings, clothing, including sports clothing, footwear and the automobile industry.

Leather is a material used since ancient times.
Still today, it is highly sought after and considered to be of great value.
As well as for producing items of clothing, typically jackets and coats, it is used in the field of luggage, gloves and shoes, due to its softness, comfort, impermeability, workability and adaptability, just to quote a few of its advantageous features.
In furnishing, on the other hand, leather is used in making padded items: armchairs and sofas, chairs in general, cushions, bed headboards, office wall coatings, insulation, etc.
More recently, it has become fashionable to cover actual pieces of furniture, like drawers and tables or objects like frames, for example. In the automobile industry, on the other hand, leather is used to cover not only the seats, but also parts of the interior like the handles or some controls, the dashboard, to cover the steering wheel or the gearshift lever knob.

Generally, covering is a manual operation carried out by highly-experienced upholsterers, who are able to produce finished products of refined beauty.

Although extremely workable and versatile, leather is a material that must be handled wisely.

Therefore, it is undeniable that the possibility of having a softer and more deformable material would allow objects to be coated that are otherwise very complicated to cover - just consider the aforementioned steering wheel - without taking a very long time, sometimes not compatible with production requirements.
On the other hand, it is often not wished to waive the use of leather, which is considered a high-level material, thus suitable for "top end" and luxury products.

Prior art document WO 98/16662 to E.I. Du Pont de Nemours and Company (US) describes a method for preparing a laminated material comprising leather, to be used in covering shoes and other products. In particular, such a method foresees coupling an elasticised fabric with leather aligning the respective directions of maximum elasticity. For the coupling it is possible to use any adhesive such as to not limit the stretching properties. The method requires that both the leather and the fabric be pre-cut before coupling, because of the shape and size of the product. The process is intended, therefore, for obtaining cuts of elasticised leather having precise and predetermined dimensions. Moreover, the alignment step needs a certain amount of care in order to be able to obtain the maximum extensibility of the laminated material. Last but not least, the elasticised leather obtained can be stretched in only one direction (so-called *"2-ways"*).

Therefore, leather has not yet been developed that is elastic in the two directions that can be used, for example, in the coating of objects or furniture, and that solves the drawbacks of materials currently available.

### OBJECT OF THE INVENTION

A first purpose of the present invention consists of a process for producing so-called *"4-ways* leather".
Such a purpose is accomplished by the method according to claim 1 and the dependent claims. According to another object, the material obtained by the process provided by the present patent application is described.
Moreover, the use of the material in the field of furnishings, footwear, clothing and the automobile industry is also described.

### BRIEF DESCRIPTION OF THE FIGURES

Figure 1 represents the elastic properties of the material of the invention, with particular reference to extensibility in the two directions;
Figure 2 shows the characteristics of fabrics that can be used as substrate material for the purposes of the present invention.

### DETAILED DESCRIPTION OF THE INVENTION

According to a first object, the present invention describes a process for preparing 4-*ways* (or bi-stretch) elastic leather.

By "leather" it is meant the leather obtained from skinning an animal (thus not human), thus natural, possibly already removed of the epidermal layer and the adipose connective layer.

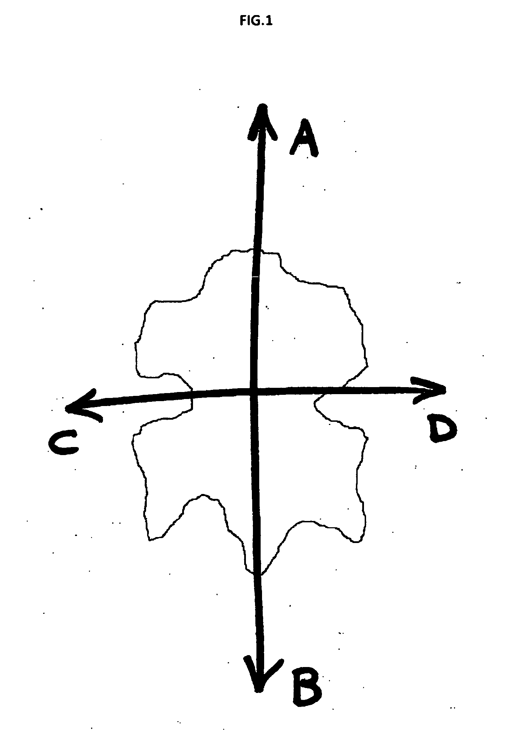

By the expression *"4-ways* elastic", for the purposes described hereafter, it is intended that the material is elastic in a direction A-B and in the C-D direction perpendicular to it (regarding this see Figure 1), therefore in the four directions indicated by the letters A, B, C and D and by the arrows in Figure 1. Such a material is also defined as bi-elasticised.

By "elastic" it is meant to say that the material obtained is able to be stretched (extended) in a certain direction, increasing its length substantially according to such a direction.
The 4-ways material of the present invention has demonstrated a stretching capability of between about 5-80%.
Advantageously, once the stretching force has stopped, the material is able to return to the original length.
Concerning this, the 4-ways leather of the invention has surprisingly demonstrated that it substantially returns to the initial length.
By "substantially" it is meant that the difference between the length of the material after an extension (the material is extended and then released) and before the extension, also defined as set parameter, is about ≤10% (of the initial length). Moreover, advantageously, it has been observed that this also happens after multiple extensions.
Since it is a *4-ways* material, the stretching in one direction, for example A-B, does not compromise the simultaneous stretching of the leather along the direction C-D.

In particular, the process of the present invention comprising the steps of:
a) providing a leather;
b) providing a suitably extended substrate material;
c) coupling the substrate material keeping it extended at the leather, obtaining a bi-layered material.

In particular, for the present purposes, the leather that can be treated according to the invention comprises any leather suitable for use, for example, in the field of furniture coverings, in the clothing industry, in the shoe industry and in the automobile industry. A non-exhaustive example list of hides includes:
hides of a cow, calf, bullock, buffalo, pig, equine, ram, kid, deer, reindeer, kangaroo, ostrich, chamois, snake, eel, etc.
Moreover, according to an aspect of the invention, each side of the leather can be coupled, i.e. placed in contact, with the substrate: the full grain leather (the smooth surface) or the flesh side (to give the chamois effect).

In terms of the fabric to be used as substrate, an elasticised (stretch) fabric is used, i.e. comprising an elastomeric yarn.
For example, in a preferred aspect of the present invention, a material comprising filaments of polyurethane available under various trade names, like for example Spandex and Lycra, artificial fibres like nylon and polyester, synthetic fibres like viscose or acrylic is used.
Natural vegetable fibres like cotton, flax and other animal fibres like silk or wool can also be used.
The material can also comprise a single component or many components interwoven and/or mixed together (for example, cotton 45%-nylon 45%- elastomer 10%).
The substrate material can indeed by produced by perpendicular weaving, where the type of weaving is given by the warp threads and by the weft threads (weave). For example, a material thus conceived can be plain weave-reps or panama. Alternatively, the substrate material can be a simple weave fabric, like a jersey or a complex weave fabric like spaced or, furthermore, a run-resistant fabric like mesh and/or charmeuse and/or spaced.

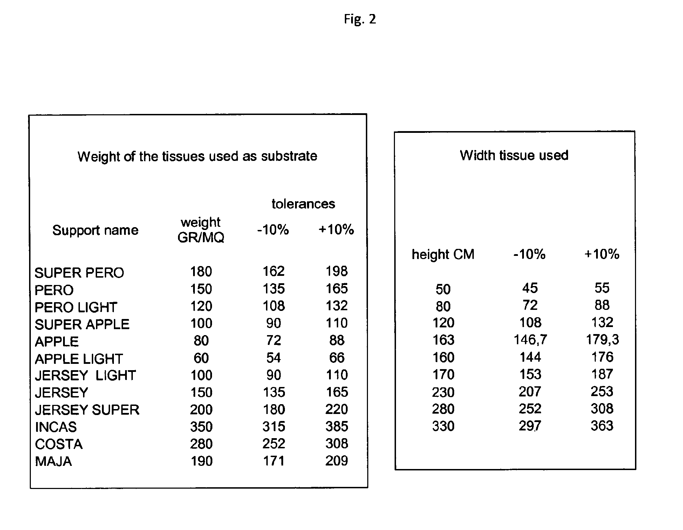

Figure 2 shows two tables that give the characteristics of some materials that can be used as a substrate.
In accordance with the present invention, the support material is an elasticized material that comprises yarns that are elastic both in the direction of the weft or transversal and in the direction of the warp or longitudinal (it is therefore bi-elastic material).
The characteristics of elasticity in the weft or transversal direction and in the warp or longitudinal direction can be the same or, advantageously, also different from one another. According to step b) the substrate material is extended; this can be obtained with suitable means and until it obtains the length considered suitable.
Moreover, the extension imparted in one direction (e.g. weft or transversal) can be different from that imparted in the other direction (e.g. warp or longitudinal respectively).

Advantageously, in step b) the support material used is not pre-cut and, preferably, it is not pre-cut due to the shape and size of the object to be coated. Indeed, operations are carried out with a continuous support.
On the other hand, in terms of step a), the leather does not necessarily need to be cut according to the dimensions of the article and it can advantageously also be whole, i.e. as obtained from the animal (possibly trimmed).

On the other hand, in terms of coupling step c), this is carried out according to consecutive steps that comprise:
c1) applying a layer of glue on the leather or on the extended support material or both on the leather and on the extended support material;
c2) coupling the leather and the extended support material obtained according to the previous step in order to obtain gluing.
   Applying the glue on the leather and/or on the extended support material depends on the type of leather and/or support used.
   For the purposes of the present invention, during step c) application is carried out through techniques known in the field like: wet techniques by spraying or doctor knife (directly with a blade in air or by thickness) or through a cylinder in general, or through dry techniques by various types of calanders, a glue, "liquid" for the wet techniques and in a "film" for the dry techniques, selected as a function of the type and thickness of the leathers, as well as the substrate material.
   Glues that can be used for this are:
   - liquid polyurethane resins: (deriving from polyester, from polyether and from polycarbonate), aromatic and/or aliphatic bicomponents and/or monocomponents, dissolved in a solvent like for example methyl ethyl ketone, toluene, ethyl acetate, isopropyl alcohol, isobutyl alcohol or in water;
   - polyurethane films (deriving from polyester, from polyether and from polycarbonate), aromatic and/or aliphatic bicomponents and/or monocomponents;
   - liquid acrylic and/or vinylacrylic resins: (deriving from acrylic acid, methacrylic acid or correlated compounds) dissolved in a solvent like for example acetone, butanone, toluene, cyclohexanone, ethyl acetate, dimethylformamide or in water.
      Latex-based adhesives can equally be considered for the purposes of the present invention, although the use of polyurethane and acrylic/vinylacrylic resins indicated above represents a preferred aspect. After coupling step c), according to a preferred aspect of the invention, there is a further step, step d), with which the material is dyed in a drum or reel (dyeing machines conventionally used in tanneries) or in textile dyeing machines like an overflow, jigger or winch washer).
      This step preferably takes place in an aqueous solution that possibly contains tanning products known the man skilled in the art and selected based on requirements.

After step d) it is possible to carry out the further treatments foreseen due to the characteristics of the finished material that it is wished to obtain: dyeing in a drum and/or reel and/or overflow and/or jigger and/or winch washer, drying, tumbling, perching, ironing, spraying, polishing, printing, embossing, finishing, grinding, milling, etc.

Indeed, it has been advantageously noted that the material obtained with the process of the present invention can be worked like non-elasticised leather.

According to a further object, we describe the use of the material of the invention for making items of clothing, for example: jackets, coats, overcoats, skirts, trousers, gloves, etc. including sports clothing like for motorcycling or horse-riding or skiing, for example. In these two specific cases, not only can items of clothing be made (including body suits) but also saddles or coverings for handles handgrips or helmets.
In the field of footwear, shoes and boots can be produced, also for use in sport.
In the field of accessories, the elastic leather according to the invention can be used to make wallets, bags and diaries.
It can also be used in luggage.
In the automobile industry, the material of the invention can advantageously be used to coat and line the seats and other parts of the interior, including the dashboard and the steering wheel. In the field of furnishing, the 4-ways leather described here has further applications. Indeed, it lends itself excellently to the production of soft furnishings, from chair seats, to cushions, to armchairs and to sofas, as well as for covering parts of furniture, like the legs of seats or armchairs.

### EXAMPLE

### Production of the 4-ways material of the invention

A support of cotton 92% and elastan 8% (e.g. pero bistretch 92% cotton + 8% elastan with weight 110 g/m² plan weave) that has been suitably extended has adhesive spread over it. Still maintaining the extension of the substrate material, the leather is coupled with it according to one of the methods given for step c1 described above.
It is left to rest to allow the glue to fix the two parts and then one proceeds to just wetting or dyeing and the subsequent steps.
This obtains a finished material with characteristics of elasticity of 40-50% in the direction of the width and 30/40% in the direction of the length.

From what has been described above, the advantages offered by the material of the present invention are clear.
Firstly, the process of the invention makes it possible to obtain elasticised leather that can be given surface properties (from colour, to roughness/non-roughness, shininess, embossing, softness) in the same ways used for non-elastic leather. Therefore, the described process does not need to sacrifice the beauty of the leather of the finished product in order to be able to obtain elastic properties.
Moreover, it does not necessarily require cutting either of the leather or of the support material because of the article to be obtained, before the coupling step; it is thus extremely versatile and very quick.
As stated above, the material obtained has surprisingly demonstrated that it can be stretched up to 80%, i.e. it can almost double its length, in both directions even simultaneously if pulled.
Moreover, once released, it recovers substantially its original length. This advantageously makes it possible to make cushions and paddings for seats that recover their shape after a seated person gets up. From the commercial point of view, therefore, it is of great interest because the fact that the visible sagging in the sofa or armchair does not remain is highly sought after.
Moreover, the possibility of stretching the leather makes upholstering enormously easier, especially for products having a very irregular and articulated shape; one only has to think of a steering wheel.
In the case of objects like helmets, coating with non-elasticised leather or *2-ways* leather would not even be possible due to its spherical shape, which would cause unsightly and unattractive wrinkles and creases.
This aspect is made even easier by the fact that the *4-ways* leather obtained according to the process of the present invention can have characteristics of elasticity that are different in one direction (for example A-B) compared to the other (for example, respectively, C-D) as shown in Figure 1.
Furthermore, it can be seen how the method of the present invention can be used both for leather of small dimensions (like calf: about 0,80 m²) and for leather of large dimensions (cow leather can reach 3-6 m²) still obtaining the surprising aforementioned advantages. Moreover, there should not be underestimated the aspect relating to the washability and wettability of the *4-ways* leather obtained according to the process of the invention, which allows cleaning operations without its characteristics and appearance being altered. In particular, it has been noted how the materials obtained thanks to the use of resins, rather than latex-based adhesives, are more resistant.

From the description provided above of the material according to the invention, the man skilled in the art can bring numerous modifications, additions or replacements of elements with other functionally equivalent ones, in order to satisfy contingent specific requirements, without however departing from the scope of the attached claims. Each of the characteristics described as belonging to a possible embodiment can be made independently from the other described embodiments.

## Claims

1. A process for preparing bi-elasticised animal leather comprising the steps of:
a) providing an animal leather;
b) providing a suitably extended bi-elasticised substrate material;
c) coupling the substrate material, keeping its desired extension, and the leather, obtaining a bi-layered material.

2. Process according to claim 1, also comprising, after step c), a step d) of sole wetting or dyeing the bi-layer material obtained.

3. Process according to claim 2, wherein in said step d) an aqueous solution is used possibly comprising tanning products known in the field.

4. Process according to claim 1 or 2 or 3, wherein in step a) said animal leather is selected from the group comprising: the leather of a cow, calf, bullock, buffalo, pig, equine, ram, kid, deer, reindeer, kangaroo, ostrich, chamois, snake, eel or other animals.

5. Process according to any one of claims 1 to 4, wherein in step b) the substrate material comprises polyurethane, artificial, acrylic or viscose fibres or other synthetic fibres; or cotton or other vegetable fibres or wool or other animal fibres; wherein said material can comprise the same type or different types of fibres or the fibres can comprise different materials mixed together or interwoven.

6. Process according to any one of the previous claims, wherein the substrate material is selected from Spandex, elastan, Lycra or other elastomers.

7. Process according to any one of the previous claims, wherein the substrate material comprises elastic and/or elasticised fibres, both in the weft in the transversal direction and in the warp in the longitudinal direction and it can have elasticity characteristics that are different in the direction of the weft in the transversal direction with respect to the direction of the warp in the longitudinal direction.

8. Process according to any one of the previous claims, wherein step c) in turn comprises the steps of:
c1) applying a layer of glue on the leather or on the extended support material or both on the leather and on the extended support material;
c2) coupling the leather and the extended support material obtained according to the previous step in order to obtain gluing.

9. Process according to claim 8, wherein step c1) is carried out through wet techniques by spraying or doctor knife both directly or with a blade in air or by thickness or through a cylinder; or through dry techniques by calanders.

10. Process according to claim 8 or 9 comprising, after step c2) the further step d) of sole wetting or dyeing the material obtained.

11. Process according to any one of claims 8 to 10, wherein in step c1) a glue is used that is selected from:
- liquid polyurethane resins: (deriving from polyester, from polyether and from polycarbonate), aromatic and/or aliphatic bicomponents and/or monocomponents, dissolved in a solvent like for example methyl ethyl ketone, toluene, ethyl acetate, isopropyl alcohol, isobutyl alcohol or in water;
- polyurethane films (deriving from polyester, from polyether and from polycarbonate), aromatic and/or aliphatic bicomponents and/or monocomponents;
- liquid acrylic and/or vinylacrylic resins: (deriving from acrylic acid, methacrylic acid or correlated compounds) dissolved in a solvent like for example acetone, butanone, toluene, cyclohexanone, ethyl acetate, dimethylformamide or in water;
- latex-based adhesives.

12. Process according to any one of claims 8 to 11, wherein said glue is a liquid polyurethane resin or a polyurethane film or an acrylic or vinylacrylic resin.

13. Elasticised leather obtainable according to the process of any one of the previous claims.

14. A 4-ways elasticised bi-layer material comprising an animal leather and a bi-elasticised support material.

15. Elasticised leather according to claim 13 or 14, **characterised by** an elongation capability of between 5-80%.

16. Elasticised leather according to any one of claims 13 to 15, **characterised by** a set roughly ≤10%.

17. A finished product made using the elasticised leather of any one of claims 13 to 16 that is represented by: a jacket or coat, jackets, coats, overcoats, skirts, trousers, gloves, overalls, products for the saddle industry, footwear in general, wallets, bags, diaries and suitcases and accessories in general.

18. A finished product coated or lined with the elasticised leather of any one of claims 13 to 16, which is represented by cushions, seats, handgrips, handles, helmets, car seats, dashboards and steering wheels or gearshift lever knobs, as well as for covering or partially covering furniture, legs of chairs or armchairs.
